(19) Europäisches Patentamt
European Patent Office
Office européen des brevets

(11) **EP 1 627 797 B1**

(12) **EUROPEAN PATENT SPECIFICATION**

(45) Date of publication and mention
of the grant of the patent:
**15.07.2009 Bulletin 2009/29**

(51) Int Cl.:
**B62D 6/00** *(2006.01)*    **B62D 5/04** *(2006.01)*
**H03M 3/02** *(2006.01)*

(21) Application number: **04733127.7**

(22) Date of filing: **14.05.2004**

(86) International application number:
**PCT/JP2004/006886**

(87) International publication number:
**WO 2004/103800 (02.12.2004 Gazette 2004/49)**

(54) **ELECTRIC POWER STEERING DEVICE CONTROLLER**

ELEKTRISCHE SERVOLENKUNGSSTEUERUNG

UNITE DE COMMANDE ELECTRIQUE DE DISPOSITIF DE DIRECTION

(84) Designated Contracting States:
**AT BE BG CH CY CZ DE DK EE ES FI FR GB GR HU IE IT LI LU MC NL PL PT RO SE SI SK TR**

(30) Priority: **26.05.2003 JP 2003147759**

(43) Date of publication of application:
**22.02.2006 Bulletin 2006/08**

(73) Proprietors:
• **NSK Ltd.**
**Tokyo 141-8560 (JP)**
• **NSK Steering Systems Co. Ltd**
**Shinagawa-ku,**
**Tokyo 141-8560 (JP)**

(72) Inventors:
• **AOKI, Yuho,**
**c/o Nsk Steering Systems Co., Ltd.**
**Maebashi-shi,**
**Gunma 3718527 (JP)**
• **ENDO, Shuji,**
**c/o Nsk Steering Systems Co., Ltd.**
**Maebashi-shi,**
**Gunma 3718527 (JP)**

(74) Representative: **Klunker . Schmitt-Nilson . Hirsch**
**Destouchesstrasse 68**
**80796 München (DE)**

(56) References cited:
EP-A- 0 575 071          JP-A- 6 006 233
JP-A- 11 017 549         JP-A- 11 105 729
JP-A- 2002 234 454       JP-A- 2002 370 662
JP-A- 2002 511 988       US-B1- 6 448 724

**Description**

Technical Field

The present invention relates to a control unit for an electric power steering apparatus for applying a steering assist force by a motor to a steering system of an automobile or vehicle and, more particularly, to a control unit for an electric power steering apparatus, which is enabled to eliminate only noises from a signal to be inputted to the control unit, with neither control lag nor attenuation of an effective signal.

Background Art

The electric power steering apparatus for assisting and urging the steering apparatus of the automobile or vehicle with the rotating force of the motor applies the driving force of the motor as the steering assist force to the steering shaft or rack shaft through a reduction mechanism by a transmission mechanism of gears or belts. In order to generate an assist torque (or a steering assist torque) precisely, the electric power steering apparatus of the prior art has to detect a torque signal from the handle and the voltage and current signal of the motor thereby to control the motor precisely on the basis of such information.

However, when those signals are to be detected and inputted to a control unit, noises are superposed on the signals so that the motor cannot be precisely controlled. As a result, vibrations occur in the assist torque thereby to cause a problem that abnormal noises or vibrations uncomfortable to the driver occur. In order to eliminate this problem, therefore, it has been devised in the prior art to eliminate the noises superposed on the detected signal, with neither a control delay nor an attenuation of the effective signal.

For example, here is described a method disclosed in Japanese Patent Publication (JP-A-2002-234454). In Fig. 1, a torque T detected by a torque sensor 102 is inputted through an interface (as will be called the "IF") and an analog-to-digital conversion (as will be called the "AD conversion") to a control unit 107. Likewise, a vehicle speed V detected by a vehicle speed sensor 106 and a motor current I of a motor 103 are inputted through the IF and the AD conversion to the control unit 107 so that the motor 103 is so controlled in its current on the basis of those signals as to generate a precise assist torque.

The fundamental concept of this control is described. The detected torque signal T is inputted through attenuation means 71 and a phase compensation 72, or the vehicle speed V is inputted through a vehicle speed operation 74 to a target current setting section 73. In this target current setting unit 73: a command current $I_A$ for generating a necessary assist torque is calculated; the motor current I is detected to generate the motor current according to the command current $I_A$; a feedback control is made by a PI control 77; and the current control of the motor is made by using a drive circuit such as an inverter utilizing a PWM operation 78 so that the motor current I may be fed according to the command current $I_A$.

In this example, the noise elimination is devised such that the command current $I_A$ is inputted not directly to the PI control 77 but after noises were once eliminated through attenuation means 75 from a command current $I_A$', the command current $I_A$ is inputted to the PI control 77. Moreover, a cut-off frequency fc of the attenuation means 75 can be varied by a speed ω calculated by a steering rate estimation 76 and the vehicle speed V. By the handle operation at a high-speed drive and by the handle operation at a parking time, therefore, the cut-off operation fc is varied, and the effective signal $I_A$ is extracted while being cleared of the noises.

The filter coefficient is made variable according to the situations, as described above. This indicates that this control element is a kind of adaptive filter. The adaptive filter has to be designed with sufficient care when it is utilized. This is because the expected results cannot be attained unless the filter coefficient is correctly designed.

In the aforementioned Japanese Patent Publication (JP-A-2002-234454), however, the cut-off frequency of the low-pass filter (as will be called the "LPF") is calculated on the basis of the absolute value of the steering rate. However, the cut-off frequency operation section is empirically determined by tuning it, but its algorithm is not clear. In the LPF having a cut-off frequency determined on the absolute value of the steering rate, moreover, the road information contained in the torque signal and the noises are not isolated to raise a problem that not only the noises but also the road information is eliminated.

In the general characteristics of the control, moreover, the differential element or the phase lead element is a source for making or raising noises. On the other hand, the LPF can eliminate the noises, but has a problem that the lag in a high-frequency range increases if the low-frequency noises are to be eliminated by reducing the cut-off frequency.

Another problem on the noises occurs in many existing control units. In most cases, the detected signal is an analog signal, and the control is digital so that the detected signal has to be subjected to the AD conversion. A method for solving that quantization error is disclosed in another Japanese Patent Publication (JP-A-10-109656). In this method, accumulation of errors is prevented by feedback adding low-order bits in the subsequent sampling. This method is effective for preventing the electric power steering apparatus from being vibrated by the limit cycle vibrations but not for eliminating the noises contained in the detected signal. The problem of the abnormal noises or vibrations uncomfortable to the driver is left unsolved.

The motor of the electric power steering apparatus for generating the assist torque cannot be correctly controlled due to the noises contained in the various detected signals of the apparatus, as has been described hereinbefore. There is the problem that the abnormal noises or vibrations uncomfortable to the driver are caused by the vibrations in the assist torque.

The present invention has been conceived in view of the background thus far described and has an object to provide a control unit for an electric power steering apparatus, from the uncomfortable abnormal noises or vibrations are eliminated by eliminating the noises contained in a variety of detected signals of the apparatus from detected signals and by controlling the motor of the apparatus so correctly as to cause no vibration in an assist torque.

US-B1-6 448 724 discloses a brushless DC motor, which modifies motor commutation events to reduce noise by providing overlapping activation of the switch being deactivated with the switch being newly activated so that three switches are temporarily activated. Said motor is used in a steering system for use in a motor vehicle. The motor's controller receives the vehicle velocity, the operator torque, the steer angle, and the rotor position as inputs.

EP-A-0 575 071 discloses a running-average filter, also referred to as a decimation filter, which is connected to the output of an oversampling-type A/D converter circuit.

Disclosure of the Invention

The aforementioned object is achieved by a control unit for an electric power steering apparatus as claimed in claim 1 and claim 3.

Particularly, the aforementioned object is achieved by a control unit for an electric power steering apparatus for applying a steering assist force by a motor to the steering system of a vehicle. The control unit comprises: a sensor for detecting the state of the electric power steering apparatus; and an operation circuit for controlling the electric power steering apparatus by inputting the signal of the sensor. In the control unit, the operation circuit includes a differential operation circuit or a phase lead operation circuit, and the operation of the differential operation circuit or the phase lead operation circuit is a decimation operation. The aforementioned object is further achieved by a control unit for an electric power steering apparatus further comprising a low-pass filter at the output of the differential operation circuit or the phase lead operation circuit decimated, and the differential operation circuit or the phase lead operation circuit has a sampling time longer than that of the low-pass filter. The aforementioned object is further achieved by a control unit for an electric power steering apparatus, in which the operation circuit is a differential operation circuit not decimated or a phase lead operation circuit not decimated, and which comprises a decimation filter at the output of the differential operation circuit or the phase lead operation circuit. The aforementioned object is further achieved by a control unit for an electric power steering apparatus, in which the state of the electric power steering apparatus is the terminal voltage of the motor, a current, a steering torque or the speed of the motor.

Brief Description of the Drawings

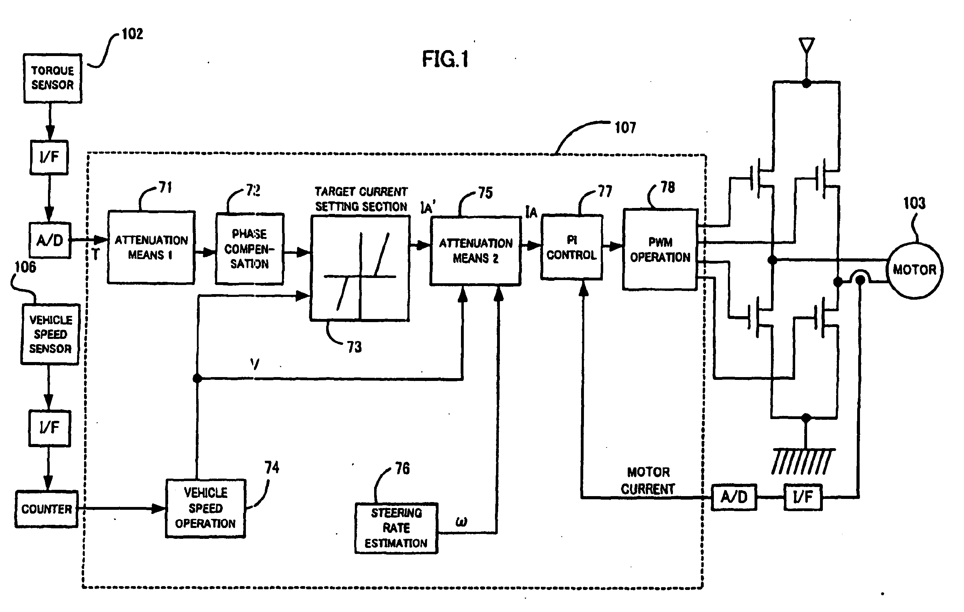

Fig. 1 is a control block diagram of a control unit for an electric power steering apparatus of the prior art.
Fig. 2 is a control block diagram of a control unit for an electronic power steering apparatus utilizing a feed forward control (i.e., an FF control), to which the invention is applied.
Fig. 3 is an arithmetic block diagram of a differential operation and an LPF circuit, which utilize the decimation of the invention.
Fig. 4 is an arithmetic block diagram of a phase lead operation and an LPF circuit, which utilize the decimation of the invention.
Fig. 5 presents diagrams showing comparisons of Bode diagram by differential operations with and without the decimation.
Fig. 6 presents diagrams showing comparisons of Bode diagram combining the differential operations with and without the decimation and the LPF circuit.
Fig. 7 presents diagrams showing comparisons of noise eliminating effect by the differential operation (A) without the decimation and the differential operation (B) with the decimation.
Fig. 8 is a detailed control block diagram of a back electromotive force calculation circuit.
Fig. 9 is a detailed control block diagram of a disturbance observer circuit.
Fig. 10 is an arithmetic block diagram of the LPF circuit utilizing the decimation of the invention.
Fig. 11 presents diagrams showing comparisons of Bode diagram by the LPF circuit utilizing the decimation.
Fig. 12 is a diagram showing a comparison of the noise eliminating effect by a decimation filter.

Fig. 13 is a control block diagram of a control unit for an electric power steering apparatus utilizing a feedback control (i.e., an FB control), to which the invention is applied.

Best Mode for Carrying Out the Invention

First of all, here will be described the decimation relating to the major technique of the invention. The decimation means a down-sampling or a thinning-out of a sampling. Generally, the decimation is employed in a sampling rate conversion and has a noise eliminating function.

Generally in the case of a differentiation or a phase lead in an arithmetic operation, moreover, adverse affections due to noises appear. In the invention, therefore, counter-measures are taken against the noises resulting from those operations.

Here, a noise filter is frequently employed so as to eliminate the noises contained in sensor signals. In case, however, an LPF to be generally utilized for eliminating noises is configured either of an analog circuit or by the method which has been described in connection with the prior art, pieces of information obtained from various sensors such as the information of a torque T and the information of a motor voltage or current attenuation together with the noises so that even the important road information contained in the torque T attenuates to make it impossible to execute the accurate control of an electric power steering.

However, the operations utilizing the decimation are excellently characterized in that the noise components of high frequencies are exclusively eliminated to process the important information contained in the sensor signals such as the useful signals of the signal of the torque T and the motor voltage and current signals without any attenuation. By executing the differential operations or the phase leading operations utilizing the excellent characteristics by the decimation, the electric power steering apparatus can be correctly controlled without being obstructed by the noises.

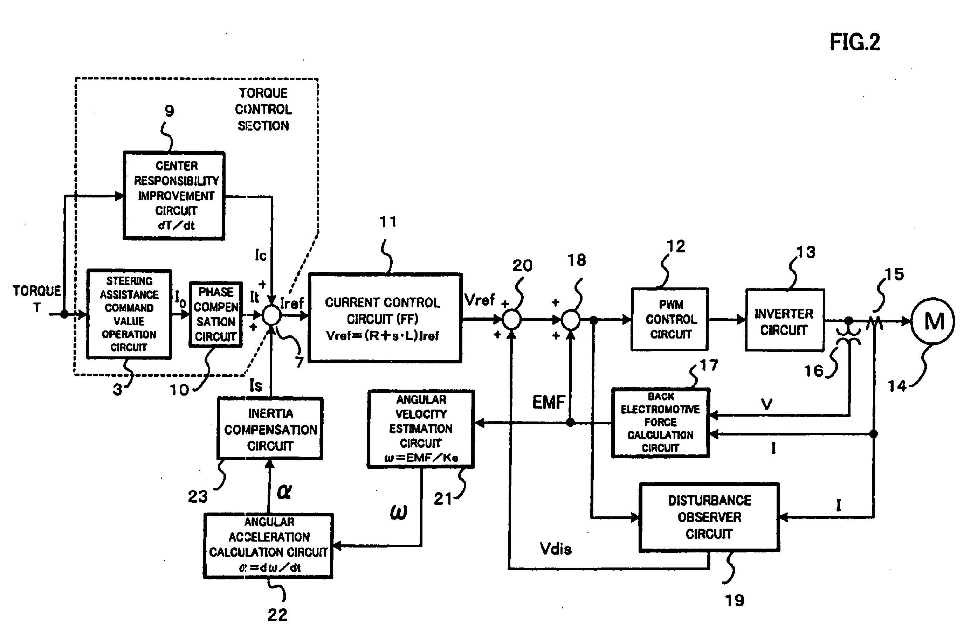

The invention is described in detail in connection with its preferred embodiment with reference to the accompanying drawings. Fig. 2 shows one embodiment of a control unit for an electric power steering apparatus of the case, in which a torque T detected by a sensor for measuring the torque and a motor terminal voltage V and a motor current I detected by sensors, i.e., a voltage detection circuit 16 and a current detection circuit 15 are subjected to arithmetic operation as inputs so as to control a motor 14 of the electric power steering apparatus.

The first description is made on the fundamental configuration of the control of the motor 14 of the electric power steering apparatus. The torque T detected by the not-shown torque sensor is inputted to a steering assist command value operation circuit 3 and a center responsibility improvement circuit 9. Specifically, the torque T is inputted to the steering assist command value operation circuit 3 having an assist characteristic map, and a steering assist command value $I_0$ as a basis for the current command value is outputted and inputted to a phase compensation circuit 10. Moreover, the torque T is inputted to the center responsibility improvement circuit 9 having differential characteristics of Formula (1), and an output It of the phase compensation circuit 10 having the characteristics of Formula (2) and an output Ic of the center responsibility improvement circuit 9 are added in an add circuit 7. The operations thus far described correspond to a torque control section. Here, the add circuit 7 adds an output Is of a later-described inertia compensation circuit 23. An output Iref of the add circuit 7 is inputted to a current control circuit 11 to determine a voltage command value Vref.

$$Ic = dT/dt \qquad \cdots \quad (1);$$

and

$$G(s) = (1+s{\cdot}T_2)/(1+s{\cdot}T_1) \qquad \cdots \quad (2).$$

In connection with the current control circuit 11, the current command value Iref is subjected to a feedback control (as will be called the "FB control") and to a feed forward control (as will be called the "FF" control). The embodiment adopting the FF control is described in Fig. 2, and an embodiment of the FB control will be described hereinafter. Therefore, the current command value Iref is inputted to the current control circuit 11 having phase lead characteristics of Formula (3), so that the voltage command value Vref is calculated as the command value:

$$Vref = (R+s{\cdot}L){\cdot}Iref \qquad \cdots \quad (3).$$

The basic command value for controlling the motor 14 is the Vref, to which auxiliary signals, i.e., a back electromotive force EMF and a disturbance Vdis are added of the motor 14. Here, the back electromotive force EMF is calculated by a back electromotive force calculation circuit 17, as will be described in detail, from the motor terminal voltage V detected by the voltage detection circuit 16 and the current I detected by the current detection circuit 15. On the other hand, the disturbance Vdis is a signal for monitoring whether or not an inverter circuit 13 outputs, as indicated by a PWM control circuit 12, to make a compensation if an error arises.

Reverting to the beginning, the disturbance Vdis is added by an add circuit 20 to the voltage command value Vref outputted from the current control circuit 11, and the back electromotive force EMF is added by an add circuit 18 so that the input to the PWM control circuit 12 becomes the signal (Vref + EMF + Vdis). On the basis of this input signal, the inverter circuit 13 is subjected to the PWM control so that the motor 14 is torque-controlled with the current fed from the inverter circuit 13.

The description thus far made is the fundamental control of the torque control of the motor 14, to which the FF control shown in Fig. 2 is applied. It is, however, desired that the output torque of the motor 14 responds in high fidelity and at a high rate to a torque command value Tref and has little torque ripple. However, the influences of the aforementioned noises obstruct the achievement of the aforementioned object, and particularly the application of the invention is needed to the individual processing circuits of Fig. 2, which are weak to the noises, because many differentiation circuits and phase lead circuits are applied to the processing circuits.

The embodiments, in which the individual processing circuits having the differentiation circuits and the phase lead circuits applied thereto are decimated, will be sequentially described in the following. In other words, the description is made sequentially in the order of the torque control section enclosed by broken lines, the back electromotive force calculation circuit 17, an angular acceleration calculation circuit 22 and a disturbance observer circuit 19.

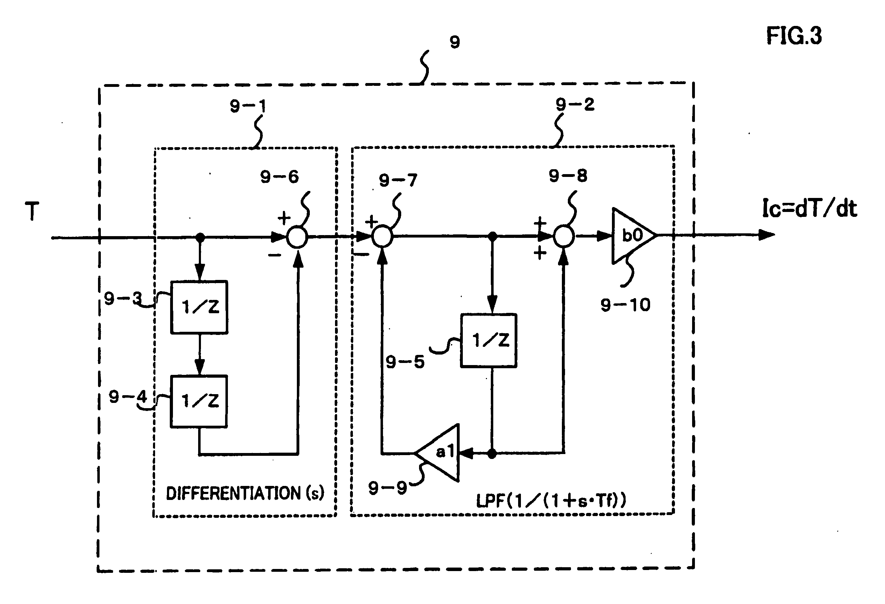

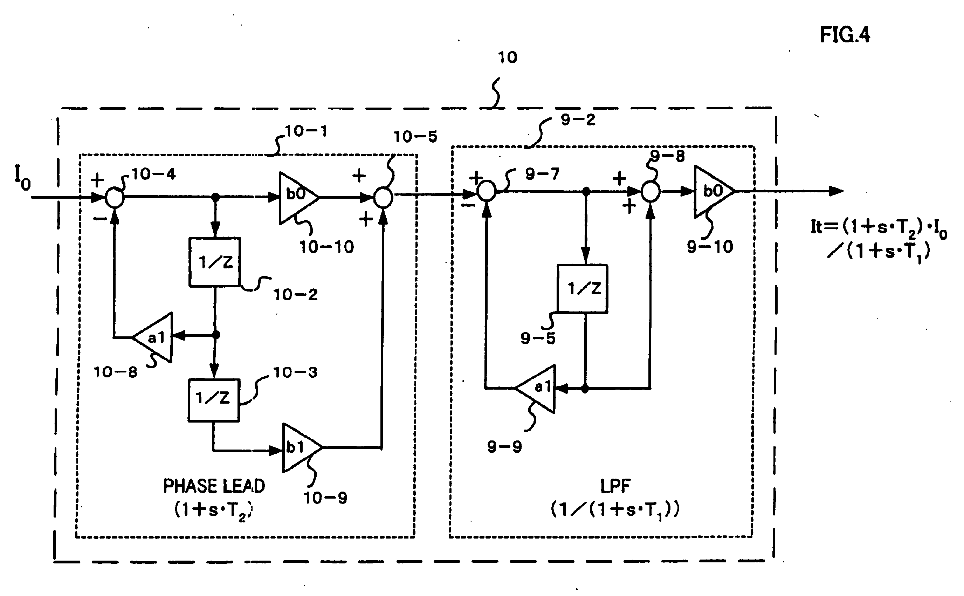

In the torque control section, as shown in Fig. 2, the center responsibility improvement circuit 9 is a differential operation of Formula (1), and the phase compensation circuit 10 is a first-order lead/lag operation, as expressed by Formula (2). Therefore, Fig. 3 shows a combination circuit of a decimated differentiation circuit and a low-pass filter circuit (as will be called the "LPF circuit"). Moreover, Fig. 4 shows a decimated first-order lead/lag circuit.

Fig. 3 is configured of a combination of an approximate differentiation circuit 9-1 and an LPF circuit 9-2. The approximate differentiation circuit 9-1 is configured of lag circuits 9-3 (1/Z) and 9-4 (1/Z) and a subtraction circuit 9-6. Specifically, the torque value T or the input of the approximate differentiation circuit 9-1 is inputted to the lag circuit 9-3 and the subtraction circuit 9-6. The output of the lag circuit 9-3 is inputted to the lag circuit 9-4. The output of the lag circuit 9-4 is the input of the subtraction circuit 9-6 and is subtracted with the torque value T in the subtraction circuit 9-6. The output of the subtraction circuit 9-6 is the output of the approximate differentiation circuit 9-1.

On the other hand, the LPF circuit 9-2 is configured of a lag circuit 9-5 (1/Z), a subtraction circuit 9-7, an add circuit 9-8, and amplification circuits 9-9 (a gain al) and 9-10 (a gain b0). Specifically, the output of the approximate differentiation circuit 9-1 is the input of the LPF circuit 9-2 and then the input of the subtraction circuit 9-7. On the other hand, the output of the amplification circuit 9-9 is the other input of the subtraction circuit 9-7, the output of which is the input of the lag circuit 9-5 and the add circuit 9-8. The output of the lag circuit 9-5 is the input of the amplification circuit 9-9 and the input of the add circuit 9-8. The output of the add circuit 9-8 is inputted to the amplification circuit 9-10, and the output of the amplification circuit 9-10 is the output of the LPF circuit 9-2.

It is important here that the lag circuits 9-3 and 9-4 of the differentiation circuit 9-1 act the decimation action to have the thinning-out effect so that it is made effective to eliminate the noises by elongating the sampling time. By making the sampling time of the LPF circuit 9-2 shorter than that of the differentiation circuit 9-1, moreover, the lag in a high-frequency range can be reduced to give a quick responsibility.

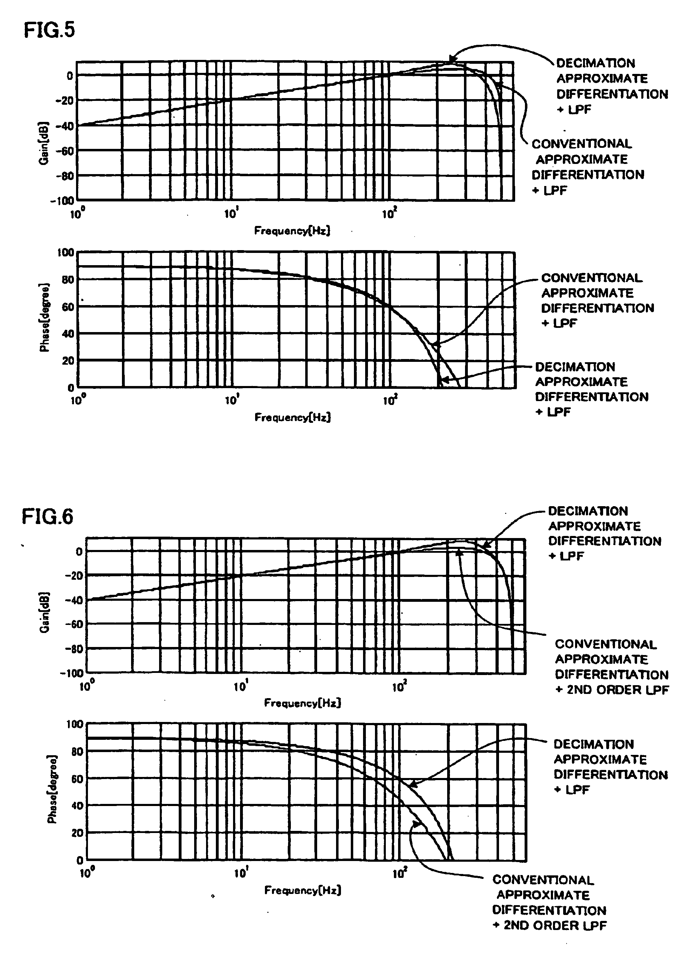

The effects of this decimation are shown in Bode diagram in Fig. 5. Fig. 5 compares on the Bode diagram the combination of the decimated approximate differentiation and the LPF circuit and the combination of the conventional approximate differentiation and the LPF circuit. In Fig. 5, what can be correctly calculated by the approximate differentiation of the prior art is up to about 100 Hz, and the rolloff factor at 400 Hz is not large. On the other hand, the decimated approximate differentiation can calculate the approximate differentiation correctly up to 200 Hz.

Fig. 6 compares the combination of the decimated approximate differentiation and the LPF circuit and the combination of the conventional approximate differentiation and the 2nd order LPF circuit. The LPF circuit has to be a 2nd order one having a high order so that the conventional approximate differentiation may acquire the same rolloff factor as that of the combination of the decimated approximate differentiation and the LPF circuit. However, the 2nd order LPF circuit is troubled by more calculations and longer phase lags. In other words, the decimated approximate differentiation is understood to have excellent effects that it has less calculations and shorter phase lags but a high rolloff factor.

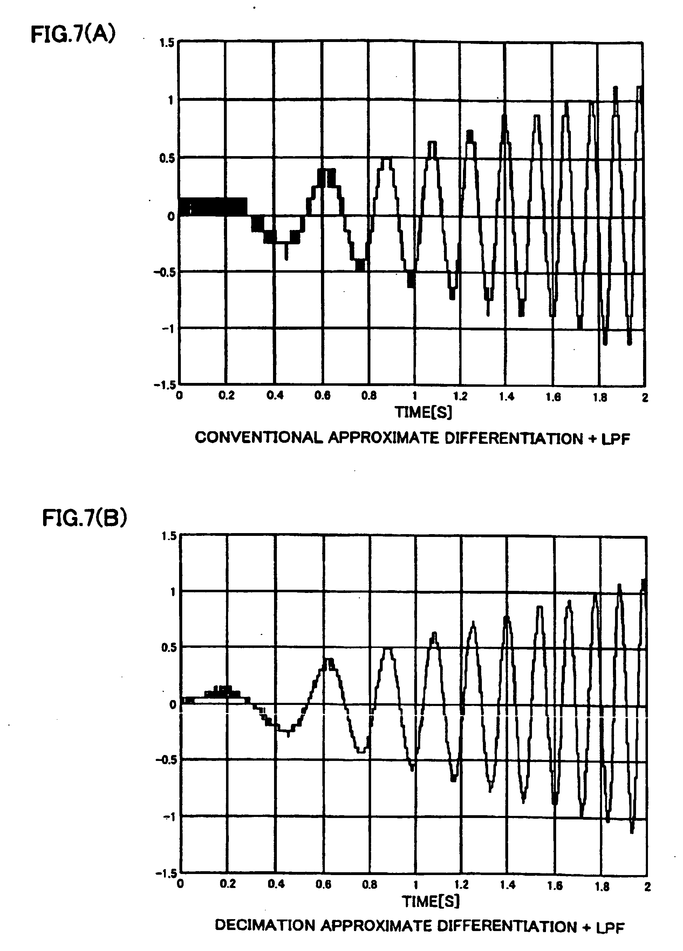

In order to confirm these effects of the decimation, the output results of the cases, in which a chirp waveform (i.e., a sinusoidal wave having an increasing frequency) is inputted to the combination between the conventional approximate differentiation and the LPF circuit and the combination between the decimated approximate differentiation and the LPF circuit, are compared and shown in Fig. 7 (A) and Fig. 7(B). Fig. 7(A) plots the signal output which was passed through the combination circuit of the differentiation circuit using no decimation and the LPF circuit, and Fig. 7 (B) plots the signal output which was passed through the combination circuit of the differentiation circuit 9-1 utilizing the decimation of Fig. 3 and the LPF circuit 9-2. It is apparent that the combination circuit utilizing the decimation of Fig. 7 (B) has less noises. Therefore, the output Ic can be obtained by the differentiation circuit having less noises, if the combination circuit is applied to the center responsibility improvement circuit 9 of Fig. 2.

Fig. 4 shows a combination circuit of a phase lead circuit 10-1 and the LPF circuit 9-2. The phase lead circuit 10-1 is configured of lag circuits 10-2 (1/Z) and 10-3 (1/Z), a subtraction circuit 10-4, an add circuit 10-5, and amplification circuits 10-8 (a gain al), 10-9 (a gain b1) and 10-10 (a gain b0). Specifically, the steering assist command value $I_0$ or the input of the phase lead circuit 10-1 is inputted at first to the subtraction circuit 10-4. Another input of the subtraction circuit 10-4 is the output of the amplification circuit 10-8. Moreover, the output of the subtraction circuit 10-4 is the inputs of the amplification circuit 10-10 and the lag circuit 10-2. The output of the lag circuit 10-2 is the input of the amplification circuit 10-8 and the lag circuit 10-3. The output of the lag circuit 10-3 is the input of the amplification circuit 10-9, and the output of the amplification circuit 10-9 and the output of the amplification circuit 10-10 are inputted to the add circuit 10-5. The output of the add circuit 10-5 is the output of the phase lead circuit 10-1.

Moreover, the LPF circuit 9-2 is identical to the LPF circuit 9-2 of Fig. 3. In this circuit, too, the noises can be eliminated by taking a long sampling time in the lag circuit 10-3 of the phase lead circuit 10-1. In the later relation to the sampling time of the LPF circuit 9-2, the lag in the high-frequency range of the LPF circuit is reduced by making the sampling time of the LPF circuit shorter than that of the phase lead circuit. By applying this circuit to the phase compensation circuit 10 of Fig. 2, therefore, the output of the phase compensation circuit 10, i.e., the command value It = $(1+s \cdot T_2)$ $\cdot I_0/(1+s \cdot T_1)$ is calculated. Here, the decimation is effective to eliminate the noises at the phase lead of $(1+s \cdot T_2)$ and to shorten the sampling time thereby to reduce the lag in the high-frequency range in $1/(1+s \cdot T_1)$ of the LPF circuit at the post stage.

The current control circuit 11 has a transfer function of $(R+s \cdot L)$, which is effective to eliminate the noises if a method similar to the phase lead circuit 10-1 in Fig. 4 is applied to the phase lead element. There have been described the differential operation on the torque control section, the phase lead operation and their combination circuit with the LPF circuit.

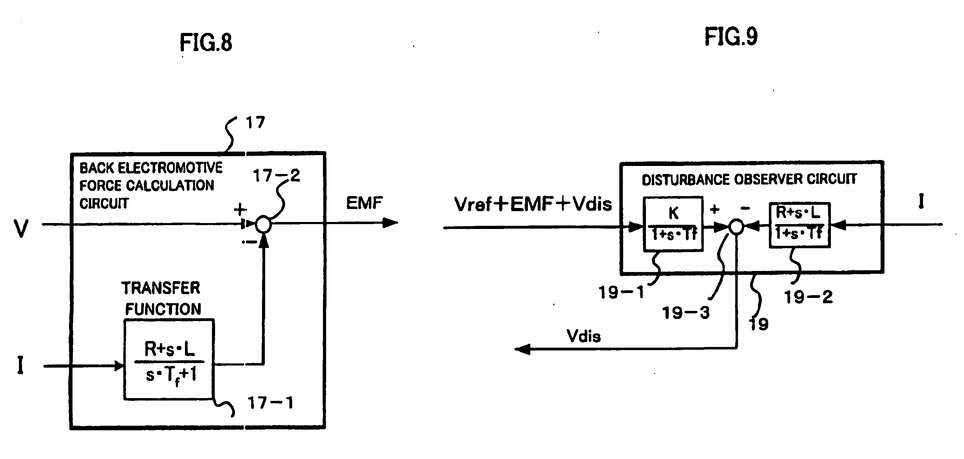

Next, the application of the invention to the back electromotive force calculation circuit 17 is described with reference to Fig. 8. At first, the back electromotive force calculation formula is expressed by (4):

$$\mathbf{EMF = V - (R+s \cdot L) \cdot I/(1+s \cdot Tf) \quad \cdots \quad (4),}$$

wherein R designates the resistance of the motor, and L designates the inductance of the motor.

In order to realize the operations, as shown in Fig. 8, the back electromotive force calculation circuit 17 is configured of: a transfer function circuit 17-1 having the transfer function of $(R+s \cdot L)/(1+s \cdot Tf)$ for inputting the motor current I as the input and; and an add circuit 17-2 receiving the output of the former and the voltage V. The noise elimination is also executed by the phase lead and the LPF on the current I containing the noises detected by the current calculation circuit 16. The noise elimination is effective if the decimation like that of the phase lead/lag circuit of Fig. 4 is applied to that transfer function circuit 17-1.

Next, an angular acceleration $\alpha$ can be calculated by Formula (5) and Formula (6).

$$\mathbf{\omega = EMF/Ke \quad \cdots \quad (5),}$$

wherein $\omega$ designates the angular velocity of the motor, and Ke designates a back electromotive force constant.

$$\mathbf{\alpha = d\omega/dt \quad \cdots \quad (6).}$$

Therefore, an angular velocity estimation circuit 21 of Fig. 2 executes the operation of Formula (5). After this, the angular acceleration calculation circuit 22 inputs the angular velocity $\omega$ and calculates the angular acceleration a by the differential operation of Formula (6). Here, the angular acceleration calculation circuit 22 performs the differential operation. If the combination circuit of the differential circuit 9-1 and the LPF circuit 9-2 of Fig. 3 is applied, this application is effective to eliminate the noises thereby to realize the high responsibility.

Finally, the disturbance observer circuit 19 is explained with reference to Fig. 9. The disturbance observer function has a function to monitor whether or not the output of the inverter circuit 13, i.e., the motor current I is outputted, as instructed with the input command value (Vref + EMF + Vdis), thereby to feed back and eliminate their difference, if any.

A specific circuit is shown in Fig. 9. This circuit is configured of: a transfer function circuit 19-1 having a transfer function of (k/(1+s·Tf)) for inputting the signal (Vref+EMF+Vdis); a transfer function circuit 19-2 having a transfer function of (R+s·L)/(1+s·Tf) for inputting the motor current I; and a subtraction circuit 19-3 for taking a difference between the output of the transfer function circuit 19-1 and the output of the transfer function circuit 19-2. The output of the subtraction circuit 19-3, i.e. , the disturbance Vdis is fed back to the add circuit 20 of Fig. 2.

Moreover, the transfer function circuits 19-1 and 19-2 execute the first-order lag operation and the phase lead/lag operation, respectively. Therefore, the noise eliminations can be effected by applying the LPF circuit 9-2 of Fig. 3 to the first-order lag operation of the transfer function circuit 19-1 and by applying a phase lead circuit 10-1 and the LPF circuit 9-2 of Fig. 4 to the phase lead/lag of the transfer function circuit 19-2.

As has been described hereinbefore, the control circuit of Fig. 2 is provided with many differential operations and phase lead operations, which cause and magnify the noises so that they are remarkably effective for eliminating the noises by the operations utilizing the decimation.

The foregoing description has been made on the embodiment, in which the decimation is applied to the differentiation circuits and the phase lead circuits. However, a long sampling time period cannot be taken in dependence on the configuration of the electric power steering apparatus, i.e., due to the difference between the electric power steering apparatus for large-sized vehicles and the electric power steering apparatus for the small-sized vehicles. In this case, a high decimation effect cannot be expected.

In this case, the differentiation circuits or the phase lead circuits are not decimated. However, similar effects can be expected as the combination, if the decimated LPF circuit (or the decimation filter) is arranged on the outputs of the conventional circuits although employed as the differentiation circuits and the phase lead circuits.

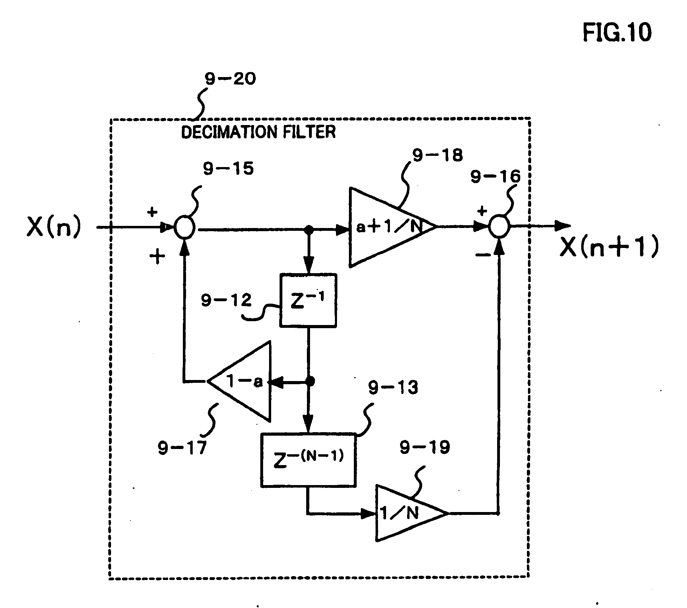

An example of the decimation filter is shown in Fig. 10. This decimation filter 9-20 is configured of lag circuits 9-12 (1/Z) and 9-13 (Z^{-(N-1)}), an add circuit 9-15, a subtraction circuit 9-16, and amplification circuits 9-17 (a gain (1-a)), 9-18 (a gain a+1/N) and 9-19 (a gain 1/N).

The connecting configuration of those elements is described. At first, the input X(n) and the output of the amplification circuit 9-17 are added at the add circuit 9-15. Moreover, the output of the add circuit 9-15 is the input to the amplification circuit 9-18 and the lag circuit 9-12. The output of the lag circuit 9-12 is the input to the amplification circuit 9-17 and the lag circuit 9-13. The output of the lag circuit 9-13 is the input of the amplification circuit 9-19. Moreover, the output of the amplification circuit 9-19 and the output of the amplification circuit 9-18 are inputted to the subtraction circuit 9-16 and are subjected to a subtraction operation so that the output of the subtraction circuit 9-16 is the output X(n+1) of the decimation filter 9-20.

Here, the decimation is realized by the lag circuits 9-12 and 9-13, and the decimation effect is given by the LPF circuit 9-2 thereby to enhance the noise eliminating effect. The LPF circuit 9-2 is replaced by the decimation filter 9-20. This is because the noises can be effectively eliminated by utilizing the decimation filter 9-20 having a high noise eliminating ability, in case the sampling time of the phase lead circuit 10-1 cannot be elongated.

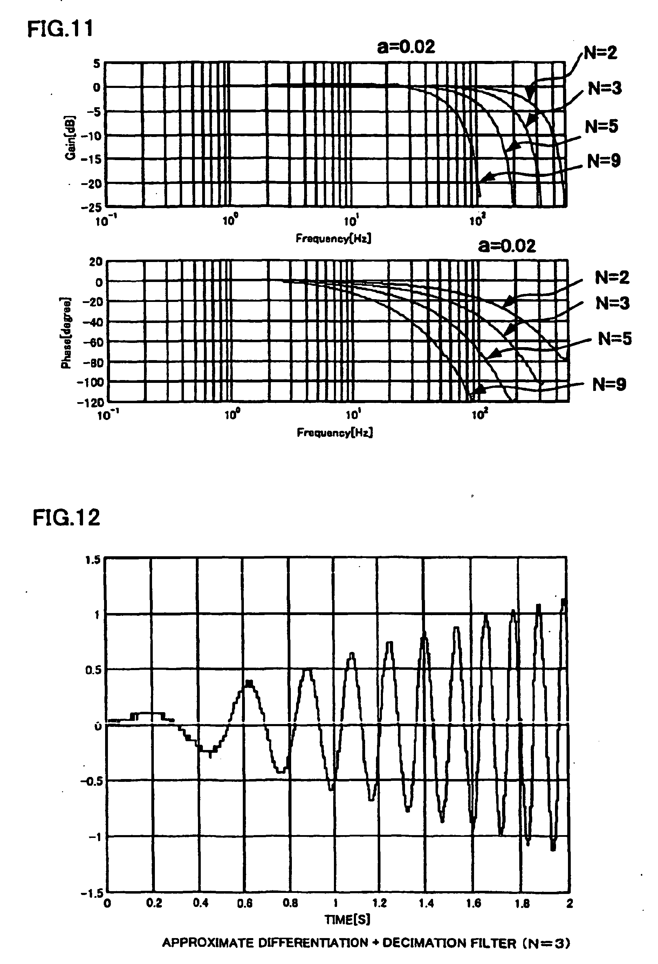

The effects of the decimation filter are shown in Fig. 11. Fig. 10 shows the configuration diagram of the case, in which the value N is generalized, but Fig. 11 presents the Bode diagram of the case, in which N = 2, 3, 5 and 9 and a = 0.02. It is understood that the cut-off frequency varies with N, and, in view of the gain, that the rolloff factor (or the shielding performance) of the noises is very high.

In order to confirm the effects of the decimation filter, the output result of the case, in which the chirp waveform is inputted to the decimation filter is shown in Fig. 12. Comparison is made between the output waveform of Fig. 12 and the output waveform of the combination of the differentiation not utilizing the decimation of Fig. 7 (A) and the LPF circuit. It is apparently understood that the output waveform having passed through the decimation filter of Fig. 12 has less noises.

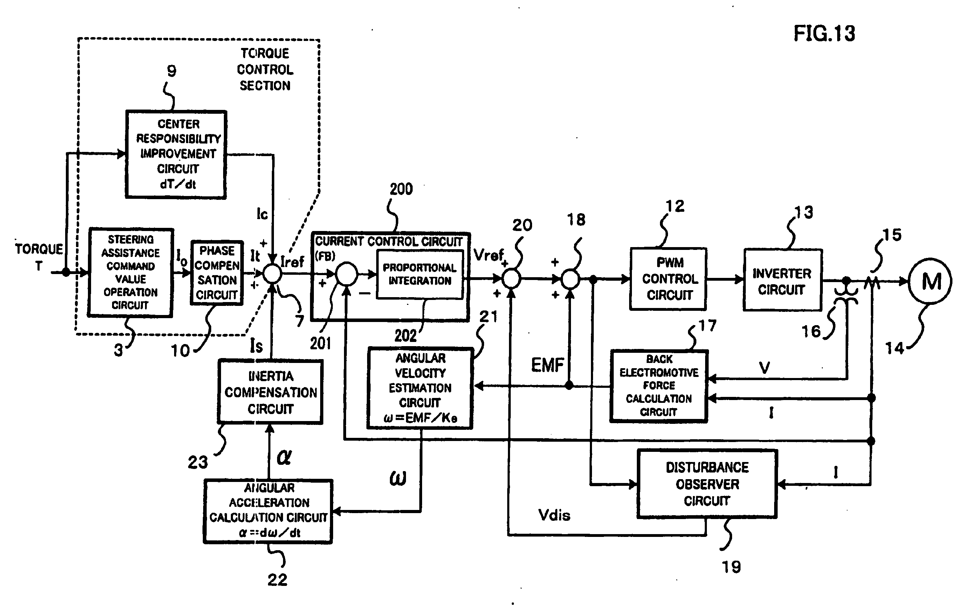

The description has been made on the case, in which the invention is applied to the control unit for the electric power steering apparatus using the FF control, as shown in Fig. 2. However, the invention is also effective even if it is applied to the control unit for the electric power steering apparatus using the FB control, as shown in Fig. 13. What is different between the control unit according to the FB control of Fig. 13 and the control unit according to the FF control of Fig. 2 resides in that the motor current I detected by the current detection circuit 15 is fed back to a current control circuit 200 so that a difference from the command value Iref is detected by a subtraction circuit 201 and inputted to a proportional integration circuit 202 thereby to calculate the voltage command value Vref. However, the differential operations and the phase lead operations to be employed in the control unit of the FB control or the LPF circuit in Fig. 13 are identical to the operations used in the control unit of the FF control of Fig. 2 so that the effects against the noises or the like can be identical to those of the case of the FF control.

As has been described hereinbefore, the invention has the effect that the signal indicating the intrinsic state is not eliminated when the noises are eliminated from the signal indicating such a state of the electric power steering apparatus as is detected by the sensors. According to the invention, therefore, the sensor for detecting the state of the electric power steering apparatus can be applied not only to the voltage detection sensor or the current detection sensor for detecting the terminal voltage or current of the motor or the torque sensor for detecting the steering torque, as exemplified in the embodiments, but also to another sensor for detecting the speed of a motor, such as a resolver or a tachometer.

According to the control unit for the electric power steering apparatus of the invention, as has been described hereinbefore, by using the differential operations or the phase lead operations utilizing the decimation, not the road information detected by the detection sensor or the like of the electric power steering apparatus but the noises having occurred in the detection sensor are eliminated so that the motor can be correctly controlled to cause no vibration in the assist torque thereby to provide the control unit for the electric power steering apparatus without any uncomfortable abnormal noise or vibration.

Industrial Applicability

The control unit for the electric power steering apparatus according to the invention eliminates not the road information detected by the detection sensor or the like of the electric power steering apparatus but the noises having occurred in the detection sensor so that the motor can be correctly controlled to cause no vibration in the assist torque thereby to provide the control unit for the electric power steering apparatus without any uncomfortable abnormal noise or vibration.

**Claims**

1. A control unit for an electric power steering apparatus for applying a steering assist force by a motor (14) to the steering system of a vehicle, comprising: a torque, current or voltage sensor (102, 16, 15) or a motor speed sensor for detecting the state of the electric power steering apparatus (T, I, V); and an operation circuit for controlling said electric power steering apparatus by inputting the signal (T, I, V) of said sensor,
**characterized in that** said operation circuit includes a differential operation circuit (9-1) or a phase lead operation circuit (10-1); and **in that** the operation of said differential operation circuit (9-1) or said phase lead operation circuit (10-1) is a sample decimation operation.

2. A control unit for an electric power steering apparatus as set forth in claim 1, **characterized by** comprising a low-pass filter (9-2) at the output of said differential operation circuit (9-1) or said phase lead operation circuit (10-1) decimated; and in that said differential operation circuit (9-1) or said phase lead operation circuit (10-1) has a sampling time longer than that of said low-pass filter (9-2).

3. A control unit for an electric power steering apparatus for applying a steering assist force by a motor (14) to the steering system of a vehicle, comprising: a torque, current or voltage sensor (102, 16, 15) or a motor speed sensor for detecting the state of the electric power steering apparatus (T, I, V); and an operation circuit for controlling said electric power steering apparatus by inputting the signal(T, I, V) of said sensor,
**characterized in that** said operation circuit is a differential operation circuit not decimated or a phase lead operation circuit not decimated; and by comprising a sample decimation filter(9-20) at the output of said differential operation circuit or said phase lead operation circuit.

4. A control unit for an electric power steering apparatus as set forth in any of claims 1 to 3, **characterized in that** the state of said electric power steering apparatus is the terminal voltage (V) of said motor, a motor current (I), a steering torque (T) or the speed of said motor.

**Patentansprüche**

1. Steuereinheit für eine elektrische Servolenkungsvorrichtung zum Zuführen einer Lenkunterstützungskraft von einem Motor (14) an das Lenksystem eines Fahrzeugs, aufweisend: einen Drehmoment-, Strom- oder Spannungssensor (102, 16, 15) oder einen Motordrehzahlsensor zum Detektieren des Zustands der elektrischen Servolenkungsvorrichtung (T, I, V); und eine Verarbeitungsschaltung zum Steuern der elektrischen Servolenkungsvorrichtung durch Eingeben des Signals (T, I, V) des Sensors,
**dadurch gekennzeichnet, dass** die Verarbeitungsschaltung eine Differenzialverarbeitungsschaltung (9-1) oder eine Phasenvoreilungverarbeitungsschaltung (10-1) enthält; und dass die Verarbeitung der Differentialverarbeitungsschaltung (9-1) oder der Phasenvoreilungverarbeitungsschaltung (10-1) eine Abtastwertdezimierungsverarbeitung ist.

**2.** Steuereinheit für eine elektrische Servolenkungsvorrichtung nach Anspruch 1, **gekennzeichnet durch** Aufweisen eines Tiefpassfilters (9-2) an dem dezimierten Ausgang der Differenzialverarbeitungsschaltung (9-1) oder der Phasenvoreilungverarbeitungsschaltung (10-1); und **dadurch gekennzeichnet, dass** die Differentialverarbeitungsschaltung (9-1) oder die Phasenvoreilungverarbeitungsschaltung (10-1) eine Abtastzeit hat, die länger ist als jene des Tiefpassfilters (9-2).

**3.** Steuereinheit für eine elektrische Servolenkungsvorrichtung zum Zuführen einer Lenkunterstützungskraft von einem Motor (14) an das Lenksystem eines Fahrzeugs, aufweisend: einen Drehmoment-, Strom- oder Spannungssensor (102, 16, 15) oder einen Motordrehzahlsensor zum Detektieren des Zustands der elektrischen Servolenkungsvorrichtung (T, I, V); und eine Verarbeitungsschaltung zum Steuern der elektrischen Servolenkungsvorrichtung durch Eingeben des Signals (T, I, V) des Sensors,
**dadurch gekennzeichnet, dass** die Verarbeitungsschaltung eine nicht dezimierte Differentialverarbeitungsschaltung oder eine nicht dezimierte Phasenvoreilungverarbeitungsschaltung ist; und **gekennzeichnet durch** Aufweisen eines Abtastwertdezimierungsfilters (9-20) an dem Ausgang der Differentialverarbeitungsschaltung oder der Phasenvoreilungverarbeitungsschaltung.

**4.** Steuereinheit für eine elektrische Servolenkungsvorrichtung nach einem der Ansprüche 1 bis 3, **dadurch gekennzeichnet, dass** der Zustand der elektrischen Servolenkungsvorrichtung die Klemmenspannung (V) des Motors, ein Motorstrom (I), ein Lenkdrehmoment (T) oder die Drehzahl des Motors ist.

## Revendications

**1.** Unité de commande pour appareil électrique de direction, pour fournir une force d'assistance de direction par un moteur (14) au système de direction d'un véhicule comportant : un détecteur de couple, de courant ou de tension (102, 16, 15) ou un détecteur de vitesse du moteur pour détecter l'état de l'appareil électrique de direction (T, I, V) et un circuit opérationnel pour commander ledit appareil électrique de direction en injectant le signal (T, I, V) dudit détecteur **caractérisée en ce que** ledit circuit opérationnel comprend un circuit différentiateur (9-11) ou un circuit opérationnel à avance de phase (10-1) et **en ce que** le fonctionnement dudit circuit différentiateur (9-11) ou dudit circuit opérationnel à avance de phase (10-1) consiste en une décimation d'échantillon.

**2.** Unité de commande pour appareil électrique de direction selon la revendication 1 **caractérisée en ce qu'**elle comprend un filtre passe-bas (9-2) à la sortie dudit circuit différentiateur (9-11), ou circuit opérationnel à avance de phase (10-1), décimé et **en ce que** ledit circuit différentiateur (9-11), ou circuit opérationnel à avance de phase (10-1), à un temps d'échantillonnage plus long que celui dudit filtre passe-bas (9-2).

**3.** Unité de commande pour appareil électrique de direction, pour fournir une force d'assistance de direction par un moteur (14) au système de direction d'un véhicule comportant : un détecteur de couple, de courant ou de tension (102, 16, 15) ou un détecteur de vitesse du moteur pour détecter l'état de l'appareil électrique de direction (T, I, V) et un circuit opérationnel pour commander ledit appareil électrique de direction en injectant le signal (T, I, V) dudit détecteur **caractérisée en ce que** ledit circuit opérationnel est un circuit différentiateur non décimé ou un circuit opérationnel à avance de phase non décimé et **en ce qu'**il comporte un filtre de décimation d'échantillon (9-20) à la sortie dudit circuit différentiateur ou dudit circuit opérationnel à avance de phase.

**4.** Unité de commande pour appareil électrique de direction selon l'une quelconque des revendications 1 à 3, **caractérisée en ce que** l'état dudit appareil électrique de direction est la tension (V) aux bornes dudit moteur, un courant de moteur (I) un couple de direction (T) ou la vitesse dudit moteur.

FIG.1

MOTOR — 103

102 — TORQUE SENSOR → I/F → A/D → 106

VEHICLE SPEED SENSOR → I/F → COUNTER

107

78 — PWM OPERATION

77 — PI CONTROL

75 — ATTENUATION MEANS 2

76 — STEERING RATE ESTIMATION

73 — TARGET CURRENT SETTING SECTION

72 — PHASE COMPENSATION

71 — ATTENUATION MEANS 1

74 — VEHICLE SPEED OPERATION

MOTOR CURRENT

A/D — I/F

IA

IA'

ω

T

V

## FIG.2

FIG.2

EP 1 627 797 B1

# FIG.3

9

9-1 DIFFERENTIATION (s)

9-2 LPF(1／(1+s·Tf))

9-6

9-7

9-8

T

9-3 1／Z

9-4 1／Z

9-5 1／Z

9-9 a1

9-10 b0

Ic=dT/dt

EP 1 627 797 B1

FIG.4

PHASE LEAD $(1+s\cdot T_2)$

LPF $(1/(1+s\cdot T_1))$

$It=(1+s\cdot T_2)\cdot I_0$ $/(1+s\cdot T_1)$

EP 1 627 797 B1

## FIG.5

## FIG.6

**FIG.7(A)**

CONVENTIONAL APPROXIMATE DIFFERENTIATION + LPF

**FIG.7(B)**

DECIMATION APPROXIMATE DIFFERENTIATION + LPF

## FIG.9

DISTURBANCE OBSERVER CIRCUIT

Vref+EMF+Vdis

$\dfrac{K}{1+s \cdot Tf}$  19-1

$\dfrac{R+s \cdot L}{1+s \cdot Tf}$  19-2

19-3

19

Vdis

I

## FIG.8

BACK ELECTROMOTIVE FORCE CALCULATION CIRCUIT

17

17-2

EMF

V

TRANSFER FUNCTION

$\dfrac{R+s \cdot L}{s \cdot T_f+1}$  17-1

I

FIG.10

EP 1 627 797 B1

## FIG.11

## FIG.12

APPROXIMATE DIFFERENTIATION + DECIMATION FILTER (N=3)

FIG.13

EP 1 627 797 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002234454 A
- JP 10109656 A
- US 6448724 B1
- EP 0575071 A